Europäisches Patentamt

European Patent Office

Office européen des brevets

(11) Publication number: **0 340 785 B1**

# EUROPEAN PATENT SPECIFICATION

(45) Date of publication of patent specification: 24.05.95    (51) Int. Cl.⁶: **C08K 5/52**, H01B 3/44,
C08L 23/08, C08L 43/04

(21) Application number: **89108134.1**

(22) Date of filing: **05.05.89**

The file contains technical information submitted
after the application was filed and not included in
this specification

(54) Stabilization of crosslinked very low density polyethylene (VLDPE).

(30) Priority: **06.05.88 US 191240**

(43) Date of publication of application:
**08.11.89 Bulletin 89/45**

(45) Publication of the grant of the patent:
**24.05.95 Bulletin 95/21**

(84) Designated Contracting States:
**AT BE CH DE ES FR GB GR IT LI LU NL SE**

(56) References cited:
**EP-A- 0 119 492**
**EP-A- 0 227 948**
**US-A- 4 412 042**
**US-A- 4 574 133**

**"Taschenbuch der Kunststoff-Additive", R.
Gächter und H. Müller, 2. Auflage, 1983, Han-
ser Verlag, München, Wien, Seiten 80-96**

(73) Proprietor: **UNION CARBIDE CORPORATION
39 Old Ridgebury Road
Danbury
Connecticut 06817 (US)**

(72) Inventor: **Turbett, Robert John
1738 Long Hill Road
Millington
07946 New Jersey (US)**
Inventor: **Umpleby, Jeffrey David
144 Library Place
Princeton
08540 New Jersey (US)**

(74) Representative: **Barz, Peter, Dr. et al
Patentanwälte Dipl.-Ing. G. Dannenberg
Dr. P. Weinhold, Dr. D. Gudel
Dipl.-Ing. S. Schubert, Dr. P.
Barz
Siegfriedstrasse 8
D-80803 München (DE)**

**Description**

This invention relates to compositions which are useful in medium voltage electrical insulation because of their resistance to heat.

Crosslinked very low density polyethylene (VLDPE), i.e., polyethylene having a density of less than 0.915 gram per cubic centimeter, has a low rigidity (modulus). This characteristic and other characteristics such as low loss factor and excellent water tree resistance make VLDPE, in its crosslinked state, a good candidate for medium voltage electrical insulation. One requirement for medium voltage electrical insulation, however, is that the selected resin have good heat aging resistance or oxidative stability. A measure of good heat aging resistance is that the resin retain at least 75 percent of its tensile strength and elongation after being exposed to a temperature of 150°C for 14 days. Unfortunately, VLDPE falls far short of that measure even with the addition of various combinations of antioxidants and stabilizers.

An object of the invention, therefore, is to provide a composition based on crosslinked VLDPE which has superior heat aging resistance as well as the other qualities useful in medium voltage insulation.

According to the present invention, the above object is met by a composition, which on crosslinking of the copolymer is heat resistant, comprising:

(a) a copolymer of ethylene and at least one alpha-olefin having 3 to 8 carbon atoms, said copolymer having a density equal to or less than 0.915 gram per cubic centimeter and being produced in the presence of a catalyst system containing (i) chromium and titanium or (ii) a catalyst precursor comprising magnesium, titanium, halogen, and an electron donor together with one or more aluminum containing compounds; and

(b) tris[2-tert-butyl-4-thio (2'-methyl-4'-hydroxyl-5-tert-butyl)phenyl-5-methyl] phenyl phosphite.

The VLDPE is a copolymer of ethylene and at least one alpha-olefin having 3 to 8 carbon atoms. The density of the copolymer is equal to or less than 0.915 gram per cubic centimeter and is preferably no lower than 0.870 gram per cubic centimeter. It can be produced in the presence of a catalyst system containing chromium and titanium or a catalyst system containing a catalyst precursor comprising magnesium, titanium, a halogen, and an electron donor together with one or more aluminum containing compounds. The former can be made in accordance with the disclosure of US-A-4,101,445 and the latter, which is preferred, can be prepared as described in US-A-4,302,565. The melt index of the VLDPE can be in the range of about 0.1 to about 20 grams per 10 minutes ad is preferably in the range of about 0.5 to about 10 grams per 10 minutes. The melt index is determined in accordance with ASTM D-1238, Condition E, measured at 190°C. Suitable alpha-olefin comonomers are exemplified by propylene, 1-butene, 1-hexene, and 1-octene. The portion of the copolymer attributed to the comonomer, other than ethylene, is in the range of about 5 to about 50 percent by weight based on the weight of the copolymer and is preferably in the range of about 10 to about 40 percent by weight.

The phosphite mentioned above is currently manufactured by Hoechst AG, Frankfurt/Main, West Germany under the designation Hostanox® VP OSP 1 metal deactivator. The phosphite compound can be introduced into the composition in an amount of about 0.02 to about 1 part by weight based on 100 parts by weight of copolymer (VLDPE) and is preferably present in the composition in an amount of about 0.03 to about 0.5 part by weight.

The VLDPE can be crosslinked or cured with an organic peroxide, or it can be grafted, in the presence of an organic peroxide which acts as a free radical generator or catalyst, with a vinyl trialkoxy silane to make the VLDPE hydrolyzable. The grafted VLDPE can then be crosslinked with moisture in the presence of a conventional silanol condensation catalyst such as dibutyl tin dilaurate, dioctyl tin maleate, stannous acetate, and stannous octoate.

The silane grafted copolymer can be prepared by the technique described below. In this copolymer, the portion attributed to the silane is present in an amount of about 0.5 percent to about 10 percent by weight based on the weight of the copolymer and is preferably incorporated into the copolymer in an amount of about 0.5 to about 4 percent by weight. The silane used to modify the copolymer can be, among others, a vinyl trialkoxy silane such as vinyl trimethoxy silane, vinyl triethoxy silane, or vinyl isopropoxy silane. Generally speaking, any unsaturated monomeric silane containing at least one hydrolyzable group can be used. If slower water cure or better shelf stability are desired, vinyl triisobutoxy silane or vinyl tris(2-ethyl-hexoxy) silane can be used.

Among the most useful organic peroxides are dicumyl peroxide, lauroyl peroxide, benzoyl peroxide, tertiary butyl perbenzoate, di(tertiary-butyl) peroxide, cumene hydroperoxide, 2,5-dimethyl-2,5-di(t-butyl-peroxy) hexyne, 2,5-dimethyl-2,5-di(t-butylperoxy)-hexane, t-butyl cumyl peroxide, and tertiary butyl hydroperoxide. The amount of organic peroxide used for crosslinking is in the range of about 0.5 to about 5 percent by weight based on the weight of the copolymer. The amount of organic peroxide, which can be used as a free radical generator in grafting, is about 0.001 to about 1 percent by weight based on the weight of the copolymer, and is preferably about 0.001 to about 0.3 percent by weight.

A typical procedure for preparing a silane grafted polyethylene follows: 100 parts of ethylene/1-butene copolymer having a density of 0.90, 0.2 parts of polymerized 1,3-dihydro-2,2,4-trimethylquinoline (an antioxidant), 0.1 part of dicumyl peroxide, and 4 parts of vinyl tri-2-ethyl-hexoxy silane are mixed in a Brabender mixer at a temperature in the range of about 80°C to about 115°C, a temperature low enough to keep the dicumyl peroxide below its decomposition temperature. After mixing for five minutes, the temperature is raised to a temperature in the range of about 150°C to about 220°C. The batch is then mixed for 5 to 10 minutes during which grafting of the silane to the copolymer occurs. The antioxidant is used as a radical trap to control the amount of crosslinking. The foregoing technique can be repeated, for example, with 3 parts of vinyltriisobutyoxysilane and 0.1 part of the antioxidant, tetrakis[methylene (3,5-di-tert-butyl-4-hydroxyhydro-cinnamate)] methane; initial mixing is in the range of 110°C to 120°C; grafting is for five minutes at 185°C.

Various processes for preparing silane grafted polyethylene and numerous unsaturated silanes suitable for use in preparing these polymers and bearing hydrolyzable groups such as alkoxy, oxy aryl, oxyaliphatic, and halogen are mentioned in US-A-3,075,948; 3,225,018; 4,412,042; 4,413,066; 4,574,133; and 4,593,071.

The VLDPE can be advantageously blended with polymers such as (i) polyethylenes having densities in the range of about 0.91 to 0.93 prepared by conventional high pressure techniques; (ii) ethylene copolymers wherein at least one comonomer is a vinyl acid, a vinyl acid ester, a vinyl ester of an organic acid, or a derivative thereof; (iii) ethylene terpolymers based on at least two comonomers referred to in items (ii) and (viii); (iv) ethylene terpolymers based on alpha-olefins having 3 to 8 carbon atoms; (v) ethylene/propylene rubbers; (vi) ethylene/propylene/diene monomer rubbers; (vii) hydrolyzable graft polymers produced by grafting silane to any of items (i) to (vi); or (viii) ethylene/hydrolyzable silane copolymers. The high pressure technique referred to in (i) is described in Introduction to Polymer Chemistry, Still, Wiley and Sons, New York, 1982, at pages 149 to 153. The ethylene/silane copolymer can be prepared by the process described in US-A-3,225,018 and the terpolymer by the process described in US-A-4,291,136.

The polymers which are blended with the base ethylene/alpha-olefin copolymer can be blended in a weight ratio of polymer to base copolymer of about 1:9 to about 9:1 and preferably in a weight ratio of about 7:3 to about 3:7.

Various conventional additives can be added in conventional amounts to the insulation compositions. Typical additives are antioxidants, ultraviolet absorbers, antistatic agents, pigments, dyes, fillers including carbon black and aluminum silicate, slip agents, fire retardants, stabilizers, crosslinking agents, halogen scavengers, smoke inhibitors, crosslinking boosters, processing aids, e.g., metal carboxylates, lubricants, plasticizers, and viscosity control agents. Fillers can be included in amounts of about 0.01 to about 60 parts by weight based on 100 parts by weight of total polymer.

The invention is illustrated by the following examples.

Examples 1 to 4

Each insulation composition is blended as follows: The components (except peroxide) are charged into a mixer such as a Brabender or Banbury mixer. The mixture is fluxed at about 150°C to 170°C for about 3 minutes at about 60 rpm. The batch is discharged at about 160°C, homogenized on a two-roll mill, and held at temperatures of 121°C and 125°C whereupon the desired amount of peroxide is added. The fully compounded crosslinkable materials are then crosslinked by compression molding plaques of 75 mil (1.9 millimeters) thickness using a preheat under low pressure of 125°C, followed by 15 minutes under high pressure at 190°C. Accelerated heat aging is conducted for 1, 2, and 3 weeks at 150°C. The percent tensile strength and elongation retained after these aging periods is used as a measure of the heat resistance of the compositions. The higher the retention of properties, the better the heat resistance.

In order to determine percent tensile strength and elongation retained, tensile strength and percent elongation of the crosslinked test slabs are measured under ASTM D638 prior to accelerated heat aging.

The copolymer (or VLDPE) used in each specimen is prepared in the manner described above for titanium based catalysts. The copolymer is an ethylene/1-butene copolymer having a density of 0.905 gram per cubic centimeter and a melt index of 1. Each specimen is considered to be one example. The percent by weight of each component other than the copolymer used in preparing the specimen, based on the weight of the total composition, is set forth in Table I. The balance of the composition is the copolymer.

EP 0 340 785 B1

Table I

| Example | 1 | 2 | 3 | 4 |
|---|---|---|---|---|
| Components | (percent by weight) | | | |
| 1. thiodiethylene bis(3,5-di-tert-butyl-4-hydroxy) hydro cinnamate | 0.2 | 0.2 | - | 0.2 |
| 2. distearyl thiodipropionate | 0.3 | 0.3 | - | - |
| 3. tris[2-tert-butyl-4-thio (2'-methyl-4'-hydroxyl-5-tert-butyl)phenyl-5-methyl] phenyl phosphite | 0.2 | 0.2 | 0.2 | 0.2 |
| 4. calcium stearate | 0.1 | 0.1 | 0.1 | 0.1 |
| 5. dicumyl peroxide | 1.5 | 1.5 | 1.5 | 1.5 |
| 6. 4,4'-thio bis(6-tert-butyl-3-methyl phenol) | - | - | 0.2 | - |
| 7. dioctadecyl disulfide | - | - | 0.3 | 0.3 |
| Properties | | | | |
| 1. % tensile strength retained | | | | |
| 1 week | - | 97.5 | 92.3 | 116 |
| 2 weeks | - | 97.5 | 89.3 | 111.4 |
| 3 weeks | - | 88.9 | 81.8 | 85.8 |
| 2. % elongation retained | | | | |
| 1 week | 98 | 98.3 | 100 | 103.3 |
| 2 weeks | 100 + | 116.9 | 101.6 | 104.9 |
| 3 weeks | 100 | 100 | 106.3 | 100 |

Examples 5 to 7

A granular ethylene/1-butene copolymer having a melt flow index of 5.4 decigrams per minute, a density of 0.900 gram per cubic centimeter, and being produced using a titanium based catalyst as described above (referred to as VLDPE) is crosslinked and aged on and off of a copper conductor.

The following formulations are prepared by making a solution of vinyl trimethoxy silane, dicumyl peroxide, dibutyl tin dilaurate, thiodiethylene bis-(3,5-di-tert-butyl-4-hydroxy) hydrocinnamate (referred to as hydrocinnamate), and tris[2-tert-butyl-4-thio (2'methyl-4'-hydroxyl-5-tert-butyl) phenyl-5-methyl] phenyl phosphite (referred to as phosphite).

These solutions are contacted with the VLDPE and tumble blended at 50°C for 2 hours in a sealed container. The homogeneous blends are subsequently extruded onto 14 AWG copper wire using a 1.9 cm (3/4 inch) Brabender extruder with a temperature profile of 150°C/210°C/230°C/200°C. The insulation thickness is 0.8 millimeter with a tolerance of 0.1 millimeter. The extruded wires are immersed in water held at 70°C for 65 hours to achieve maximum crosslinking. Samples of the insulated wire and insulation with the copper wire removed are aged at 150°C in an oven. Components and results are set forth in Table II. The results demonstrate that the phosphite permits adequate grafting and crosslinking as well as lending excellent thermal stability to the crosslinked VLDPE both in the presence and absence of copper.

Notes to Table II:

1. The percent by weight of all components except VLDPE is given. The balance is VLDPE.
2. Heat elongation is determined under IEC 502/540 in percent (%) at 200°C at 0.2 MPa (megapascals) for 15 minutes.
3. Hot set is determined in percent (%) under IEC 502/540.
4. Gel content is determined in percent (%) under IEC 502/540.
5. Tensile stress at Break is determined in MPa under IEC 502/540.
6. Elongation at Break is determined in percent (%) under IEC 502/540.
7. Percent Tensile Stress Retained is determined under IEC 502/540 for 1 week and 2 weeks off the copper wire and on the copper wire.

4

8. Percent Elongation Retained is determined under IEC 502/540 for 1 week and 2 weeks off the copper wire and on the copper wire.

Table II

| Example | 5 | | 6 | 7 | |
|---|---|---|---|---|---|
| Components | | | | | |
| vinyl trimethoxy silane | 1.42 | | 1.42 | 1.42 | |
| dicumyl peroxide | 0.18 | | 0.18 | 0.23 | |
| dibutyl tin dilaurate | 0.05 | | 0.05 | 0.05 | |
| hydrocinnamate | 0.2 | | 0.2 | 0.2 | |
| phosphite | - | | 0.2 | 0.2 | |
| Properties | | | | | |
| heat elongation (%) | 130 | | fail | 110 | |
| hot set (%) | 10 | | - | 8 | |
| gel content (%) | 64 | | 58 | 69 | |
| tensile stress (MPa) | 11.6 | | 10.2 | 12.2 | |
| elongation (%) | 650 | | 700 | 610 | |
| | off Cu | on Cu | | off Cu | on Cu |
| % tensile stress retained | | | | | |
| 1 week | 45 | <35 | - | 110 | 106 |
| 2 weeks | - | - | - | 93 | 90 |
| % elongation retained | | | | | |
| 1 week | <25 | <25 | - | 88 | 90 |
| 2 weeks | - | - | - | 80 | 77 |

Examples 8 to 20

In a Brabender mixer held at 150°C are compounded the formulations described below. Mixing is effected for 3 minutes at 50 revolutions per minute and the resulting compositions are further homogenized on a two roll mill, the rolls of which are heated to 121°C and 125°C, respectively. To the composition on the two roll mill are added the peroxide crosslinking agent in sufficient quantity, normally 1.7 percent by weight of the composition, to achieve adequate crosslinking. The fully compounded crosslinkable materials are then crosslinked by compression molding plaques of 75 mil (1.9 millimeters) thickness using a preheat under low pressure at 125°C followed by 15 minutes under high pressure at 190°C. Specimens are aged in an oven at 150°C and the tensile properties measured according to ASTM D638.

The formulations all contain 0.2 percent by weight of the hydrocinnamate described in examples 5 to 7; 0.3 percent by weight distearylthiodipropionate; 0.1 percent by weight calcium stearate; and dicumyl peroxide.

The phosphite is the one described in examples 5 to 7.

The VLDPE's are made with the titanium based catalyst as described above.

The characteristics of the VLDPE's are as follows.

VLDPE 1 is a copolymer of ethylene and propylene having a melt flow index of 1.9 and a density of 0.889 gram per cubic centimeter.

VLDPE 2 is a copolymer of ethylene and 1-butene having a melt flow index of 2.2 and a density of 0.889 gram per cubic centimeter.

VLDPE 3 is a copolymer of ethylene and 1-butene having a melt flow index of 3.9 and a density of 0.886 gram per cubic centimeter.

VLDPE 4 is a copolymer of ethylene and 1-hexene having a melt flow index of 3.1 and a density of 0.894 gram per cubic centimeter.

The HPLDPE used in some of the formulations is a high pressure low density homopolymer of ethylene having a melt flow index of 2.1 and a density of 0.923 gram per cubic centimeter.

Components and properties are given in Table III. The dicumyl peroxide and the phosphite amounts are given in percent by weight based on the weight of the total polymer. The amounts of polymer are given in parts by weight based on 100 parts by weight of total polymer.

Table III

| Example | 8 | 9 | 10 | 11 | 12 | 13 | 14 | 15 | 16 | 17 | 18 | 19 | 20 |
|---|---|---|---|---|---|---|---|---|---|---|---|---|---|
| VLDPE 1 | 100 | 75 | 50 | - | - | - | - | - | - | - | - | - | - |
| VLDPE 2 | - | - | - | 100 | 100 | 75 | 50 | - | - | - | - | - | - |
| VLDPE 3 | - | - | - | - | - | - | - | 100 | 75 | 50 | - | - | - |
| VLDPE 4 | - | - | - | - | - | - | - | - | - | - | 100 | 75 | 50 |
| HPLDPE | - | 25 | 50 | - | - | 25 | 50 | - | 25 | 50 | - | 25 | 50 |
| dicumyl peroxide | 1.4 | 1.4 | 1.4 | 1.2 | 1.4 | 1.5 | 1.7 | 1.6 | 1.8 | 2.0 | 1.2 | 1.6 | 1.7 |
| phosphite | 0.2 | - | 0.2 | - | 0.2 | 0.2 | - | 0.2 | - | 0.2 | 0.2 | 0.2 | - |
| **Properties** | | | | | | | | | | | | | |
| tensile stress (MPa) | 20.2 | 21.9 | 23.0 | 21.1 | 23.2 | 22.4 | 21.6 | 19.2 | 23.2 | 19.5 | 17.4 | 22.1 | 21.2 |
| elongation (%) | 600 | 540 | 410 | 760 | 600 | 510 | 440 | 720 | 570 | 460 | 520 | 470 | 410 |
| % tensile stress retained | | | | | | | | | | | | | |
| 10 days | 86 | 78 | 87 | 34 | 90 | 85 | 100 | 100 | 16 | 100 | 93 | 99 | 94 |
| 2 weeks | 83 | 18 | 68 | 13 | 86 | 70 | 27 | 93 | 14 | 72 | 95 | 58 | 30 |
| % elongation retained | | | | | | | | | | | | | |
| 10 days | 100+ | 15 | 100+ | 20 | 100+ | 100+ | 100+ | 100+ | 10 | 100+ | 100+ | 100+ | 100+ |
| 2 weeks | 100+ | 9 | 100+ | 7 | 100+ | 100+ | 18 | 100+ | 7 | 100+ | 100+ | 100+ | 12 |

EP 0 340 785 B1

**Claims**

1.  A composition comprising:

    (a) a crosslinkable copolymer of ethylene and at least one alpha-olefin having 3 to 8 carbon atoms, said copolymer having a density equal to or less than 0.915 gram per cubic centimeter and being produced in the presence of a catalyst system containing (i) chromium and titanium or (ii) a catalyst precursor comprising magnesium, titanium, halogen, and an electron donor together with one or more aluminum containing compounds; and

    (b) tris[2-tert-butyl-4-thio(2'-methyl-4'-hydroxyl-5-tert-butyl)phenyl-5-methyl] phenyl phosphite.

2.  The composition defined in claim 1 wherein component (b) is present in an amount of 0.02 to 1 part by weight, preferably 0.03 to 0.5 part by weight per 100 parts by weight of component (a).

3.  The composition defined in claim 1 or 2 wherein the copolymer is crosslinked.

4.  The composition defined in any one of claims 1 to 3 wherein the density of the copolymer is no less than about 0.870 gram per cubic centimeter.

5.  The composition defined in any one of claims 1 to 4 wherein the portion of the copolymer attributed to the alpha-olefin is in the range of 5 to 50 percent by weight based on the weight of the copolymer.

6.  The composition defined in any one of claims 1 to 5 additionally containing one or more of the following polymers:

    (i) polyethylene having a density of from 0.91 to 0.93 gram per cubic centimeter;
    (ii) interpolymers of ethylene and one or more comonomers selected from among:
    alpha-olefin monomers having from 3 to 8 carbon atoms,
    vinyl acids,
    vinyl acid esters,
    vinyl esters of organic acids, and
    diene hydrocarbon monomers;
    (iii) said polymers grafted with at least one unsaturated hydrolyzable silane compound;
    (iv) interpolymers of ethylene and hydrolyzable vinyl silane compounds,
    wherein the weight ratio of said polymer to the copolymer of claim 1 ranges from 1:9 to 9:1.

7.  The composition defined in any one of claims 1 to 6 additionally containing one or more of the following polymers:

    (i) polyethylene having a density in the range of 0.91 to 0.93 gram per cubic centimeter;
    (ii) ethylene copolymers wherein at least one comonomer is a vinyl acid, a vinyl acid ester or a vinyl ester of an organic acid:
    (iii) ethylene terpolymers based on at least two comonomers referred to in items (ii) and (viii);
    (iv) ethylene terpolymers based on alpha-olefins having 3 to 8 carbon atoms;
    (v) ethylene/propylene rubbers;
    (vi) ethylene/propylene/diene monomer rubbers;
    (vii) hydrolyzable graft polymers produced by grafting silane to any of items (i) to (vi); or
    (viii) ethylene/hydrolyzable silane copolymers, said polymer being present in the composition in a weight ratio of polymer to copolymer of 1:9 to 9:1.

8.  The composition defined in any one of claims 1 to 7 wherein the copolymer is hydrolyzable.

9.  The composition defined in claim 8 wherein the copolymer is grafted with a vinyl alkoxy silane.

10. The composition defined in any one of claims 1 to 9 additionally containing at least one antioxidant other than component (b) and an organic peroxide.

11. The composition defined in any one of claims 1 to 10 additionally containing at least one antioxidant other than component (b) and a silanol condensation catalyst.

**12.** The composition defined in claims 10 or 11 additionally containing a metal carboxylate.

**13.** An electrical conductor insulated with the crosslinked copolymer defined in claim 3.

**14.** An electrical conductor insulated with the composition of claim 6 wherein component (a) is crosslinked.

**15.** A process for making an insulated electrical conductor comprising coating the conductor with the composition of any one of claims 1 to 12 and crosslinking the copolymer.

**16.** The process defined in claim 15 wherein the composition contains an organic peroxide.

**17.** The process defined in claim 16 wherein the composition contains a vinyl alkoxy silane and a silanol condensation catalyst.

**Patentansprüche**

**1.** Zusammensetzung, welche umfaßt:
(a) ein vernetzbares Copolymer von Ethylen und mindestens einem alpha-Olefin mit 3 bis 8 Kohlenstoffatomen, das eine Dichte von gleich oder weniger als 0,915 Gramm pro Kubikzentimeter aufweist und in Anwesenheit eines Katalysatorsystems hergestellt ist, welches enthält (i) Chrom und Titan oder (ii) einen Magnesium, Titan, Halogen und einen Elektronendonor umfassenden Katalysator-Vorläufer zusammen mit einer oder mehreren Aluminium-haltigen Verbindungen; und
(b) Tris[2-tert-butyl-4-thio(2'-methyl-4'-hydroxyl-5-tert-butyl)phenyl-5-methyl]phenylphosphit.

**2.** Zusammensetzung nach Anspruch 1, in welcher die Komponente (b) in einer Menge von 0,02 bis 1 Gewichtsteilen, vorzugsweise 0,03 bis 0,5 Gewichtsteilen, pro 100 Gewichtsteile der Komponente (a) anwesend ist.

**3.** Zusammensetzung nach Anspruch 1 oder 2, in welcher das Copolymer vernetzt ist.

**4.** Zusammensetzung nach irgendeinem der Ansprüche 1 bis 3, in welcher die Dichte des Copolymeren nicht weniger als etwa 0,870 Gramm pro Kubikzentimeter beträgt.

**5.** Zusammensetzung nach irgendeinem der Ansprüche 1 bis 4, in welcher der auf das alpha-Olefin zurückgehende Teil des Copolymeren im Bereich von 5 bis 50 Gewichtsprozent, bezogen auf das Gewicht des Copolymeren, liegt.

**6.** Zusammensetzung nach irgendeinem der Ansprüche 1 bis 5, zusätzlich eines oder mehrere der folgenden Polymeren enthaltend:
(i) Polyethylen mit einer Dichte von 0,91 bis 0,93 Gramm pro Kubikzentimeter;
(ii) Interpolymere von Ethylen und einem oder mehreren Comonomeren, die ausgewählt sind aus: alpha-Olefin-Monomeren mit 3 bis 8 Kohlenstoffatomen Vinylsäuren, Vinylsäureestern, Vinylestern von organischen Säuren und Dien-Kohlenwasserstoff-Monomeren;
(iii)besagte Polymere, die mit mindestens einer ungesättigten hydrolysierbaren Silanverbindung gepfropft sind;
(iv) Interpolymere von Ethylen und hydrolysierbaren Vinylsilan-Verbindungen,
in welcher das Gewichtsverhältnis des Polymeren zum Copolymeren von Anspruch 1 im Bereich von 1:9 bis 9:1 liegt.

**7.** Zusammensetzung nach irgendeinem der Ansprüche 1 bis 6, zusätzlich eines oder mehrere der folgenden Polymeren enthaltend:
(i) Polyethylen mit einer Dichte im Bereich von 0,91 bis 0,93 Gramm pro Kubikzentimeter;
(ii) Ethylen-Copolymere, in denen mindestens ein Comonomer eine Vinylsäure, ein Vinylsäureester oder ein Vinylester einer organischen Säure ist;
(iii)Ethylen-Terpolymere auf der Basis von mindestens zwei der Comonomeren, auf die in den Punkten (ii) und (viii) Bezug genommen wird;
(iv) Ethylen-Terpolymere auf der Basis von alpha-Olefinen mit 3 bis 8 Kohlenstoffatomen;
(v) Ethylen/Propylen-Kautschuke;

(vi) Ethylen/Propylen/Dien-Monomer-Kautschuke;

(vii)hydrolysierbare Pfropf-Polymere, hergestellt durch Pfropfen von Silan auf irgendeinen der Gegenstände (i) bis (vi); oder

(viii) Ethylen/hydroylsierbares Silan-Copolymere, wobei das Polymer in der Zusammensetzung in einem Gewichtsverhältnis von Polymer zu Copolymer von 1:9 bis 9:1 anwesend ist.

8. Zusammensetzung nach irgendeinem der Ansprüche 1 bis 7, in welcher das Copolymer hydrolysierbar ist.

9. Zusammensetzung nach Anspruch 8, in welcher das Copolymer mit einem Vinylalkoxysilan gepfropft ist.

10. Zusammensetzung nach irgendeinem der Ansprüche 1 bis 9, zusätzlich mindestens ein von der Komponente (b) verschiedenes Antioxidans und ein organisches Peroxid enthaltend.

11. Zusammensetzung nach irgendeinem der Ansprüche 1 bis 10, zusätzlich mindestens ein von der Komponente (b) verschiedenes Antioxidans und einen Silanol-Kondensationskatalysator enthaltend.

12. Zusammensetzung nach Anspruch 10 oder 11, zusätzlich ein Metallcarboxylat enthaltend.

13. Elektrischer Leiter, isoliert mit dem in Anspruch 3 definierten vernetzten Copolymer.

14. Elektrischer Leiter, isoliert mit der Zusammensetzung von Anspruch 6, in welcher die Komponente (a) vernetzt ist.

15. Verfahren zur Herstellung eines isolierten elektrischen Leiters, umfassend das Überziehen des Leiters mit der Zusammensetzung von irgendeinem der Ansprüche 1 bis 12 und die Vernetzung des Copolymeren.

16. Verfahren nach Anspruch 15, in welchem die Zusammensetzung ein organisches Peroxid enthält.

17. Verfahren nach Anspruch 16, in welchem die Zusammensetzung ein Vinylalkoxysilan und einen Silanol-Kondensationskatalysator enthält.

**Revendications**

1. Composition comprenant :

(a) un copolymère réticulable d'éthylène et d'au moins une alpha-oléfine ayant 3 à 8 atomes de carbone, ledit copolymère ayant une masse volumique égale ou inférieure à 0,915 gramme par centimètre cube et étant produit en présence d'une formulation de catalyseur contenant (i) du chrome et du titane ou (ii) un précurseur de catalyseur comprenant du magnésium, du titane, un halogène et un donneur d'électrons en association avec un ou plusieurs composés contenant de l'aluminium ; et

(b) du phosphite de tris[2-tertio-butyl-4-thio(2'-méthyl-4'-hydroxy-5-tertio-butyl)phényl-5-méthyl]-phényle.

2. Composition suivant la revendication 1, dans laquelle le constituant (b) est présent en une quantité de 0,02 à 1 partie en poids, de préférence de 0,03 à 0,5 partie en poids, pour 100 parties en poids du constituant (a).

3. Composition suivant la revendication 1 ou 2, dans laquelle le copolymère est réticulé.

4. Composition suivant l'une quelconque des revendications 1 à 3, dans laquelle la masse volumique du copolymère est non inférieure à environ 0,870 gramme par centimètre cube.

5. Composition suivant l'une quelconque des revendications 1 à 4, dans laquelle la portion du copolymère attribuée à l'alpha-oléfine est comprise dans l'intervalle de 5 à 50 pour cent en poids sur la base du poids du copolymère.

**6.** Composition suivant l'une quelconque des revendications 1 à 5, contenant en outre un ou plusieurs des polymères suivants :

(i) un polyéthylène ayant une masse volumique de 0,91 à 0,93 gramme par centimètre cube ;

(ii) des interpolymères d'éthylène et d'un ou plusieurs comonomères choisis parmi : des monomères alpha-oléfiniques ayant 3 à 8 atomes de carbone ; des acides vinyliques, des esters d'acides vinyliques, des esters vinyliques d'acides organiques, et des monomères hydrocarbonés diéniques ;

(iii) lesdits polymères greffés avec au moins un silane hydrolysable insaturé ;

(iv) des interpolymères d'éthylène et de vinylsilanes hydrolysables,

dans laquelle le rapport pondéral dudit polymère au copolymère suivant la revendication 1 va de 1:9 à 9:1.

**7.** Composition suivant l'une quelconque des revendications 1 à 6, contenant en outre un ou plusieurs des polymères suivants :

(i) un polyéthylène ayant une masse volumique comprise dans l'intervalle de 0,91 à 0,93 gramme par centimètre cube ;

(ii) des copolymères d'éthylène dans lesquels au moins un comonomère est un acide vinylique, un ester d'acide vinylique ou un ester vinylique d'un acide organique ;

(iii) des terpolymères d'éthylène à base d'au moins deux comonomères mentionnés dans les paragraphes (ii) et (viii) ;

(iv) des terpolymères d'éthylène à base d'alpha-oléfines ayant 3 à 8 atomes de carbone ;

(v) des caoutchoucs éthylène/propylène ;

(vi) des caoutchoucs éthylène/propylène/monomère diénique;

(vii) des polymères greffés hydrolysables produits par greffage d'un silane à l'un quelconque des composés des paragraphes (i) à (vi) ; ou

(viii) des copolymères éthylène/silane hydrolysable, ledit polymère étant présent dans la composition en un rapport pondéral du polymère au copolymère allant de 1:9 à 9:1.

**8.** Composition suivant l'une quelconque des revendications 1 à 7, dans laquelle le copolymère est hydrolysable.

**9.** Composition suivant la revendication 8, dans laquelle le copolymère est greffé avec un vinylalkoxysilane.

**10.** Composition suivant l'une quelconque des revendications 1 à 9, contenant en outre au moins un antioxydant autre que le constituant (b) et un peroxyde organique.

**11.** Composition suivant l'une quelconque des revendications 1 à 10, contenant en outre au moins un antioxydant autre que le constituant (b) et un catalyseur de condensation du type silanol.

**12.** Composition suivant la revendication 10 ou 11, contenant en outre un carboxylate métallique.

**13.** Conducteur électrique isolé avec le copolymère réticulé répondant à la définition suivant la revendication 3.

**14.** Conducteur électrique isolé avec la composition suivant la revendication 6, dans laquelle le constituant (a) est réticulé.

**15.** Procédé de production d'un conducteur électrique isolé, comprenant le revêtement du conducteur avec la composition suivant l'une quelconque des revendications 1 à 12 et la réticulation du copolymère.

**16.** Procédé suivant la revendication 15, dans lequel la composition contient un peroxyde organique.

**17.** Procédé suivant la revendication 16, dans lequel la composition contient un vinylalkoxysilane et un catalyseur de condensation du type silanol.